# EUROPEAN PATENT SPECIFICATION

(11) **EP 4 138 211 B1**
(45) Date of publication and mention of the grant of the patent: **13.09.2023**
(21) Application number: 21192036.8
(22) Date of filing: 19.08.2021
(51) Int. Cl.: H01Q 1/22, H01Q 1/38, H01Q 5/40, H01Q 7/00, H01Q 9/28, H01Q 21/26, H01Q 21/28, G06K 19/077

(54) **ANTENNA ARRANGEMENT**
ANTENNENANORDNUNG
AGENCEMENT D'ANTENNE

(43) Date of publication of application: 22.02.2023
(73) Proprietor: Turck Holding GmbH, 58553 Halver (DE)
(72) Inventor: Niemi, Teemu, 01350 Vantaa (FI)
(74) Representative: DTS Patent- und Rechtsanwälte Schnekenbühl und Partner mbB

(56) References cited:
- US-A1- 2005 104 789
- US-B1- 6 437 750
- US-B1- 7 262 729
- US-B2- 9 780 852
- ANTTI O KARILAINEN ET AL: "Chiral antenna element as a low backscattering sensor", ANTENNAS AND PROPAGATION (EUCAP), PROCEEDINGS OF THE 5TH EUROPEAN CONFERENCE ON, IEEE, 11 April 2011 (2011-04-11), pages 1865-1868, XP031877605, ISBN: 978-1-4577-0250-1

## Description

The present invention relates to an antenna arrangement provided on a printed circuit board. The antenna arrangement comprises a chiral antenna.

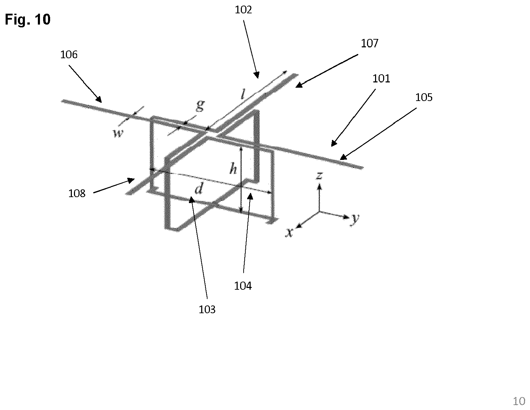

Chiral antennas are generally known. A specific design of a chiral antenna is described by the scientific assay from A. O. Karilainen, P. Alitalo, S. A. Tretyakov: "Chiral Antenna Element as Low Backscattering Sensor", Proceedings of the 5th European Conference on Antennas and Propagation (EUCAP). Fig. 10 shows a configuration of the specific chiral antenna which is disclosed in the aforementioned prior art. Herein, a first antenna element 101 and a second antenna element 102 is provided. Each antenna element is constituted by a λ/2 wire defining a loop portion 103, 104 and two straight portions 105, 106, 107, 108 such that the total length of the wire (e.g., 102+103+108) is approximately λ/2. From the respective loop portion there extend in opposing directions, orthogonally with respect to the loop portion, two straight portions 105, 106, 107, 108. By applying a voltage to each of the respective first and second antenna element 101, 102, there can be provided a circular polarized antenna radiation. As this circular polarized radiation has a helix form and thus can be right- or left-handed, this antenna is named chiral antenna.

In the prior art different configurations of such chiral antennas are known.

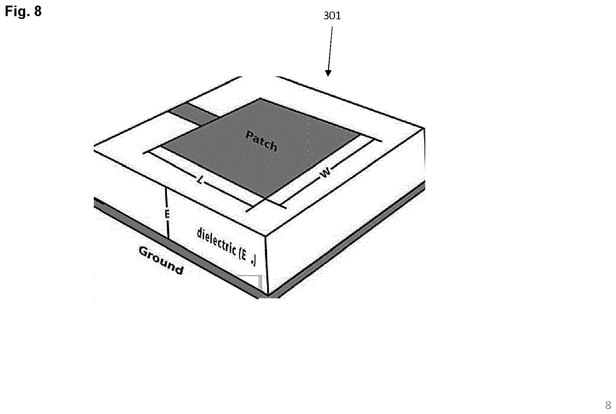

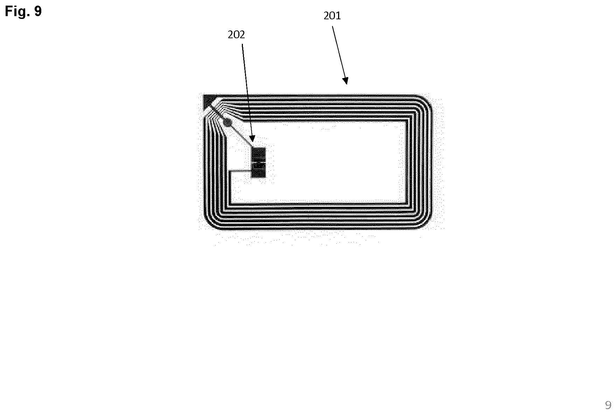

Further generally known antenna configurations in the field of RFID technology are shown in Figs. 8 and 9. Fig. 9 shows a constitution of a loop antenna 201 which provides a plurality of loop portions provided within a plane. The antenna 201 is connected to a microchip 202 having stored the respective information. In the specific example of Fig. 8, the loop antenna 201 comprises a printed wire printed to a circuit board, wherein the wire is provided in a coil form with a coil diameter increasing from an inner to outer direction. The configuration shown in Fig. 9 is a near field antenna for HF RFID, thus it has multiple loops wound in a spiral way.

A further configuration of a known RFID antenna is shown in Fig. 8. In this case, the antenna is configured as a so-called patch antenna 301, the radiation comes from the patch provided on a dielectric material.

Such patch antenna can also be designed as a circularly polarized antenna. In this case a rectangular patch is provided, whose side is approximately λ/4, that means approximately 8 cm at ultra-high frequency (UHF) RFID frequencies. This patch can then be driven from the two orthogonal points at the edges with a 90° phase shift.

However, generally, in the further development of ultra-high frequency RFID readers there are required specific antenna characteristics. These characteristics can also be obtained by different antennas provided on a single area at a printed circuit board.

In particular it is necessary to have a circular polarized antenna radiation to ensure that the tag can be read in any orientation. Further, it is required to have a certain front-to-back ratio, that means a ratio of the signal strength transmitted in forward direction in respect to the backward direction. Namely, in order to ensure that the reader does not read tags that are behind it, the signal strength in forward direction should be much higher than in backward direction. The complete antenna should also use only a very limited space.

The present inventors have found that the conventional antennas cannot be simultaneously miniaturized, while providing circular oriented antenna radiation with a good front-to-back ratio. In particular, when the patch size of a circular polarized antenna having the patch geometry reduced so that it is mounted on a 116 mm wide ground plane, it was not possible to reach a front-to-back ratio of 11 dB or better.

It also cannot be made arbitrarily large near field antennas. For constituting a near field UHF RFID antenna a single loop is enough when tuned to the correct frequency e.g. with capacitors. The capacitors in the near field antenna are to compensate the inductance of the printed wires (traces) printed on the printed circuit board that allows even these bigger antennas to have a uniform current distribution along the length of the near field antenna loop. I If the loop circumference of such a near field UHF RFID antenna is in the same order of the magnitude of the wavelength, the loop starts to act as a dipole and is no longer a near field antenna. Therefore, also the physical size of the near-field loop antenna cannot be made very huge.

Due to the aforementioned disadvantages the present inventors had found that the combination of the specific chiral antenna, with at least one of a further antenna, having a loop form which acts as a near-field antenna and/or with a further chiral antenna having an opposite chirality, opposite from the chiral antenna, can be provided within a small size on one printed circuit board. Such an arrangement has improved abilities in at least one or all of front-to-back ratio, reduced sized, near field antenna function, purity of circularly polarized radiation emitted by the antenna and/or combination of opposing handedness's of polarization emitted by the antenna. Further relevant prior art is described in US 2005/104789 A1, US 6 437 750 B1, US 7 262 729 B1, and US 9 780 852 B2.

In order to solve the aforementioned problem, according to a first aspect of the present invention as defined in claim 1 it is thus suggested to have on a circuit board an antenna arrangement with a first chiral antenna and a further antenna. The further antenna is constituted by a loop having an inner diameter which is bigger than at least the first length and width of the first chiral antenna, such that the chiral antenna is provided with its first length and width entirely within the loop of the further antenna.

The chiral antenna comprises or consists of a first antenna element and a second antenna element. Each antenna element has a loop portion and two straight end portions extending in opposite directions orthogonal with respect to the loop portion. The first and second antenna elements are rotated with respect to each other about 90°, are adapted to be fed with a 90°phase difference (Voltage/ Potential), and are provided offset with respect to each other in a plane of the printed circuit board. The respective outer diameter of the loop portions define a respective first length and width of the first chiral antenna. For example, the outer diameter of the loop portion of the first antenna element defines a first length of the chiral antenna, while the respective outer diameter of the loop portion of the second antenna element defines a first width of the chiral antenna. Further, the respective opposing straight ends of the first and second antenna define a respective second width and length of the first chiral antenna. That means, the respective opposing straight end portions of the first chiral antenna element defines a second width of the first chiral antenna and the respective opposing straight end portions of the second antenna element define a second length of the chiral antenna, that means, therefore, the respective second length and second width is, in particular, longer than the first length and respectively first width. It may be the case that the respective first length and width correspond to each other and/or that the second length and width correspond to each other; in this case the first width and length define a size of the first chiral antenna, first respectively second size of the chiral antenna. However, at least the respective further antenna, which has a loop, surrounds the first chiral antenna such that the first length and width is smaller than the inner diameter of the further antenna and the first chiral antenna is placed within a central portion of the further antenna. With said combination a good tradeoff between size, front-to-back ratio and circular polarization can be achieved.

According to a further development, the loop of the further antenna is arranged approximately orthogonal with respect to the loop portions of the first chiral antenna. That means, when it is viewed along the central axis of the loop of the further antenna, the respective central axis of the loop of the further antenna is arranged perpendicular to a respective central axis of the loop portion of the respective first and second antenna elements. Thus, according to a preferred embodiment, the respective loop portions of the first and second antenna element and the loop of the further antenna have axis which are arranged orthogonal with respect to each other.

The loop of the further antenna may be constituted by loop sections which are connected with respect to each other by a respective capacitor means. The loop of the further antenna may be provided within one layer of a printed circuit board and defined by a respective loop wire (printed wire).

According to a further preferred embodiment, the loop wire is or is not provided in the same layer of the printed circuit board as one of the wires of the first chiral antenna and/or is or is not provided within the same circuit board. Therefore, the respective further antenna may be provided in the same circuit board or in a different circuit board. However, in the latter case the circuit board which contains the first chiral antenna is preferably mounted on top or below the circuit board in which the further antenna is provided. However, it is beneficial to provide both antennas in one uniform circuit board comprising different layers. The respective loop portions of the first chiral antenna may be formed such that the loop portions extend between different layers of the printed circuit board. However the loop of the further antenna may be provided within one layer of a printed circuit board and defined by a respective loop wire (printed wire).

Further, the respective further antenna may have in the particular case only one single loop which is connected to a respective voltage supply. With said one single loop, an antenna being an UHF near filed antenna is provided. There may be not provided more loops which are printed in a spiral form as it is e.g. in the case of the prior art shown in Figure 9. It is beneficial in the present case to have this only single loop. However, depending on the circumstances, also such an antenna as e.g. shown in Fig. 9 having multiple loops can be provided as further antenna. The respective loop in the particular case may be formed by a printed wire, wherein the loop may have, when viewed from top, a square shaped form or rectangular form with 90° corners connecting straight sections of the wire such that one single loop is formed. Within the area having the square shaped form or rectangular form, there may be placed within subsequent layers of the circuit board the first chiral antenna. As long as the aforementioned capacitor means are provided, said capacitor means may be provided in the area of the straight sections of the wire forming the loop. However the position of the capacitor means is not delimited to said position, they could also be placed in the corners of the near field antenna.

According to the further development defined by claim 7, one or both of the straight end portions of a respective one of the first antenna element and the second antenna element of the first chiral antenna may extend in a radial direction with respect to the loop of the further antenna and cross(es) the loop of the further antenna when viewed from a top side along a central axis of the loop of the further antenna.

It may be the case that a respective length and width of the antenna arrangement is defined at one end side by the very end of the one straight end portion of the straight end portions which extends the radial direction with respect to the loop of the further antenna, and at the opposing end side by an outer diameter portion of the loop of the further antenna.

Alternatively, to the aforementioned case a respective length and width of the antenna arrangement is defined by the opposing ends of the straight end portions of the same antenna element, which straight end portions extend in the radial direction with respect to the loop of the further antenna. At least the latter case the aforementioned second width and length of the first chiral antenna is bigger than the other diameter of the loop of the further antenna.

The respective second straight wire section is directly connected via the via connectors to the first straight wire section in a different layer below or atop the respective layer in which second straight wire sections are provided. The via connectors proved contacts across different layers of the circuit board. Therefore, the respective loop portion of each of the first and second antenna elements extend orthogonally to the stacking direction of the printed circuit board.

Further, the respective first antenna element and second antenna element which are rotated with respect to each other about 90° and offset in respect to each other may be provided in different layers. That means, that the respective second straight wire section of the second antenna element may be provided in a layer where no straight wire section of the first antenna element is provided and that also the first straight wire section of the second antenna element is provided in a layer where no straight wire section of the first antenna element is provided. However, it may also be the case that second straight wire section and/or a first straight wire section of the second antenna element may be provided in the same layer as the first or second straight wire section of the first antenna element.

According to the further development, for a more compact design, the second straight wire sections of the second antenna element are provided in a layer of the printed circuit board between the second straight wire sections of the first antenna element and the first straight wire section of the first antenna element. Thus, for example, the respective first antenna element and the respective second antenna element are in the stacking direction of the printed circuit board offset from each other, but interdigitating with each other and are thus nested with respect in each other.

According to a further development defined in claim 10, the second straight wire section is connected to a respective third straight wire section via a respective transition wire section connecting the third straight wire section with the second straight wire section. The respective transition wire section provides when viewed form a top or bottom to the printed circuit board an inclined transition with the same layer of the printed circuit board such that the second straight wire section and the respective third straight wire section are extending approximately orthogonal with respect to each other. This transition wire section with the inclined transition has the benefit that the respective rectangular corner portions connecting the second and third straight wire sections to each other in the prior art in Fig. 10, which are very close to each other, can be prevented.

Thus, two adjacent connection points within one antenna element, which connection points are connection points connecting the third straight wire section to the second straight wire section, have a further distance with respect to each other.

According to a further development, the transition wire sections of a respective antenna are approximately parallel with respect to each other and have a predetermined distance from each other in the direction of the layer of the printed circuit board.

Additionally, to the further antenna being, for example, a near-field antenna, there may be provided at the same circuit board a second chiral antenna having the same constitution as the first chiral antenna but only an opposite chirality. Both chiral antennas may be mounted very close to each other and may provide, for example, a right- and left-handed antenna beam. Each of the aforementioned chiral antennas may be placed in a respective further antenna as it is described for the first chiral antenna in the foregoing.

According to a further aspect the present inventors also found that not only the combination of the first chiral antenna with a further antenna is beneficial, it may also be an invention to provide two chiral antennas of the same type, wherein the respective chiral antennas have opposite chiralities. Such an arrangement is defined in claim 13.

However, at least the aforementioned combined antennas occupy an area of a printed circuit board 90mm x 90 mm or less.

For the combination of the first chiral antenna with the second chiral antenna, said antennas occupy an area of a printed circuit board of 90 mm x 90 mm or less, in particular of 88 mm x 80 mm or less.

For the combination of the first chiral antenna with the further antenna, said antennas occupy an area of a printed circuit board of 60 mm x 60 mm or less in particular of 54x54mm or less.

The aforementioned areas are unexpected small area having the improved antenna characteristics which are necessary for near-field RFID applications.

Further, it is preferred that the respective arrangement is provided on one circuit board which has a thickness of 3.2 mm or less, and preferably of 2.4 mm or less. That means that only four layers may be provided in the circuit board, in which the respective wires are provided.

According to the further embodiment, an RFID transmitter unit and/or a receiver unit having the aforementioned inventive antenna arrangement is provided.

The present inventor has found that the combination of the antennas do not disturb each other, such that the surrounding further antenna does not disturb the chiral antenna. Also, the two different chiral antennas don't disturb each other.

Further, the combined antenna has a better front-to-back ratio than what was achievable with a standard patch antenna given the limited size of the ground plane.

In the following there are described some embodiments with respect to the figures, herein it is shown in
Fig. 1 a first embodiment of an antenna arrangement provided on a printed circuit board comprising a first chiral antenna and a further antenna;
Fig. 2 a second embodiment of an antenna arrangement provided on a printed circuit board comprising two chiral antennas, wherein each chiral antenna has, compared to the other antenna, an opposite chirality;
Fig. 3 a schematic constitution of the further antenna shown in Fig. 1;
Fig. 4 a schematic constitution of one of the antenna elements of the chiral antenna;
Fig. 5 a calculated antenna diagram of the first embodiment at θ=90°;
Fig. 6 a calculated antenna diagram of the first embodiment at θ=0°;
Fig. 7 a different view first embodiment shown in Fig. 1;
Fig. 8 a prior art patch antenna;
Fig. 9 a prior art near-field loop antenna; and
Fig. 10 a prior art chiral antenna.

The antenna configurations shown in Fig. 8-10 for the prior art have been described in the introduction section.

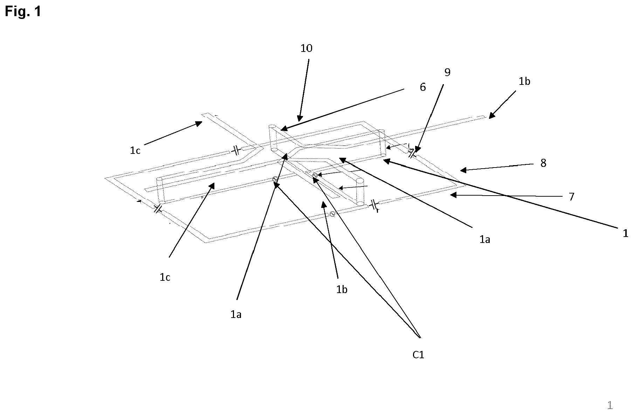

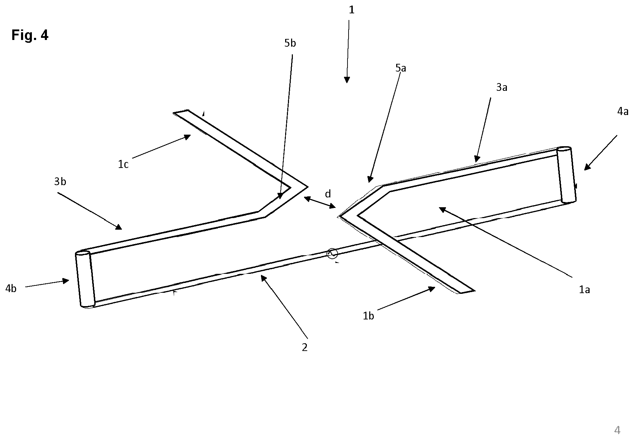

Fig. 4 shows one antenna element 1 of the first chiral antenna 10 shown in Fig. 1. Such an antenna element 1 comprises a loop portion 1a and two straight end portions 1b and 1c. The straight end portions 1b and 1c extend in opposite directions with respect to each other. In the particular example, the respective straight end portions are longitudinal and coaxially aligned with respect to each other in a direction octagonal to the direction along which the loop portion 1a extends. The loop portion 1a has a first straight wire section 2 and two second straight wire sections 3a, 3b. The respective opposing ends of the first straight wire section 1 are connected via respective connectors 4a, 4b, which extend orthogonally with respect to the stacking direction of the layers of the printed circuit board (which is not-shown in the figures) and between the different layers of the printed circuit board to connect the respective ends of the first straight wire section to the respective ends of the second straight wire sections 3a, 3b. On the respective opposite side of the straight wire section, at which they are not connected to the wire connector 4a, 4b, the respective second straight wire sections are connected to the straight end portions 1b, 1c which are also defined as third straight wire sections.

In the particular example, there is further provided a transition wire section 5a, 5b, the transition wire sections 5a, 5b connect the third straight wire section with the second straight wire section in an inclined manner, the inclination is such that the respective transition via sections 5a, 5b of the same antenna element are extending parallel with respect to each other with a certain distance d with respect to each other (see Fig. 4).

This configuration is chosen to prevent that the connection points between the second straight wire section and a respective third straight wire section come too close to each other or contact each other.

The respective first straight wire section 2 is provided in one layer of the respective circuit layer that is now shown in the figures, this straight wire section may be a printed wire. The second, third straight wire sections and the transition wire portions are provided in a further layer of the printed circuit board different from the respective layer in which the first straight wire section 2 is provided. However, the respective third straight wire sections (which are constituted by the straight end portions 1b, 1c) , the second straight wire portions and the transition wire portions of one common antenna element are provided in the same layer and also provided as a printed wire. The contacting of the wire is done via the respective via connectors 4a, 4b, which are of electrically conductive material provided in holes punched through the respective layers of the circuit board. It may be the case that the total height of the printed circuit board corresponds to a four-layer printed circuit board and thus, the antenna may be provided with an area having a thickness of approximately 3.2 mm, and preferably 2.4 mm in the stacking direction of the layers of the printed circuit board. Such an antenna element, which is described with reference to Fig. 4, is combined with a second antenna element having a corresponsive configuration, both antenna elements form, as shown in Fig. 1, one chiral antenna 10.

The respective first and second antenna elements are nestled within each other and interdigitating each other as it is shown in Figure 1. The second antenna elements 6 is rotated for 90° and then moved in an offset relation to the first antenna element 1, such that the respective axis of rotation is provided at a center area of the chiral antenna 10 where no wire section is extending through.

Due to this offset configuration it is possible that there is no contact of the respective transition wire sections 5a, 5b and second and third wire section of the different antenna elements 1, 6.

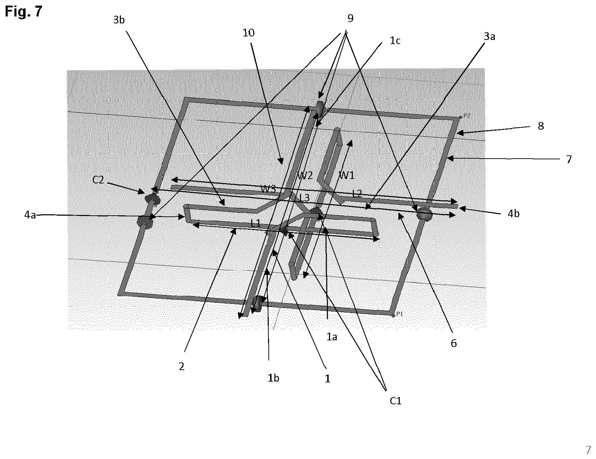

As shown in Fig. 1 and 7, the antenna element identified with reference sign 1 is defined as first antenna element and the antenna element identified with reference sign 6 is identified as second antenna element. It can be best seen in the constitution of Fig. 7 that the second wire section 3a, 3b and third wire section, as well as the transition wire section 5a, 5b of the second antenna element 6 are provided in a layer of the printed circuit board between a layer at which the second straight wire section 3a, 3b, the transition wire section 5a, 5b, and the third straight wire section of the first antenna element 1 are provided and a layer of the printed circuit board at which the first straight wire section 2 of the first antenna element is provided.

Also the respective first straight wire section 2 of the first antenna element is provided in a layer of the printed circuit board between a first straight wire section 2 of the second antenna element and the layer at which the second straight wire section, the third straight wire section and the transition wire section of the second antenna element 6 is provided. Therefore, the respective wire sections of each of the antenna elements 1, 6 are provided in different layers of the printed circuit board.

The printed circuit board has in the present case only four layers. All of the four layers are provided with respective wiring sections, namely, the first layer has the first straight wire section 2 of the second antenna element 6, the second layer has the first straight wire section 2 of the first antenna element 1, the third layer has the second straight wire sections 3a, 3b, the transition wire sections 5a, 5b and third straight wire sections of the second antenna element 6 and the fourth layer has the second straight wire sections 3a, 3b, the transition wire sections 5a, 5b and third straight wire sections of the first antenna element 1.

In view of the configuration shown in Figs. 1 and 7, the further antenna 7 is provided, in this particular example, in the same layer as the first straight wire section 2 of the second antenna element 6. However, the respective further antenna 7 may have a loop 8 which is provided in a different layer as any of the layers in which the wire sections of the first and second antenna element is provided. This respective further antenna 7 may be provided in a different circuit board or integrated in the same circuit board but however provided in a different layer.

A voltage is applied via the first voltage supply point marked with C1 in Figs. 1 and 7 to the first and second antenna elements 1 and 6 of the first chiral antenna 10. Said first voltage supply point is provided approximately midway the first straight wire section 2 of the respective first and second antenna element 1, 6. An alternating current as shown by the wave form icon the first voltage supply point is supplied. The tip of the three-dimensional arrow in Fig. 7 shown the direction of the current.

The application of the voltage/ current provides the chirality of the antenna beam as it is described in A. O. Karilainen, P. Alitalo, S. A. Tretyakov: "Chiral Antenna Element as Low Backscattering Sensor", Proceedings of the 5th European Conference on Antennas and Propagation (EUCAP) and the documents cited therein.

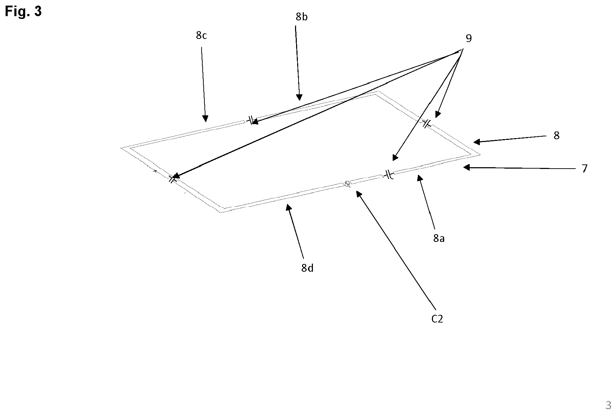

A schematic example of the further antenna 7 is shown in Fig. 3. The further antenna 7 has loop sections 8a, 8b, 8c, 8d. These loop sections are connected to each other via a respective capacitor 9. The respective loop sections 8a, 8b, 8c, 8d form, in the present case, one single loop 8 not having any spiral configuration, the loop 8 completely surrounds at least the loop portion 1a of the first chiral antenna 10.

A voltage is applied via the second voltage supply point marked with C2 in Fig,. 3 and 7. An alternating current as shown by the wave form icon the second voltage supply point is supplied. The tip of the three dimensional arrow in Figure 7 shown the direction of the current.

In the specific case, the loop 8 has a square shaped form. However the loop may have any form, e.g. an rectangular form. However the loop provides a central portion in which the first chiral antenna is provided. In the particular case, the respective loop is formed by a loop wire which may be printed on a circuit board. The length of the further antenna is defined by the longest direction of the respective loop and the width is defined by the shortest direction (see Fig. 3). As in the present case the loop has a square shape, the width and length of the loop are the same. The loop sections have in the particular case an L form having two shanks with the same length. However, as the loop has a square shape, the shanks may have different length.

In the embodiment shown in Figs. 1 and 7 one of the respective opposing ends of each antenna element extends across the radial direction of the loop 8, such that a respective length L3 and width W3 (e.g., Fig. 7) of the antenna arrangement is defined at one end side by the very end of the one straight end portion of the straight end portions 1b, 1c, which extends the radial direction with respect to the loop 8 of the further antenna 7 and at the opposing end side by an outer diameter portion of the loop 8 of the further antenna.

Alternatively, a respective length L3 and width W3 of the antenna arrangement may be defined by the opposing ends of the straight end portions 1b, 1c of the same antenna element, which straight end portions 1b, 1c extend in the radial direction with respect to the loop 8 of the further antenna 7.

As further variant, a respective length L3 and width W3 of the antenna arrangement may be defined by the outer diameter of the loop 8 of the further antenna 7.

The first chiral antenna 10 has in the example first width and length W1, L1 and a second with and length W2, L2. For example, the outer diameter of the loop portion 1a of the first antenna element 1 defines a first length L1 of the chiral antenna, while the respective outer diameter of the loop portion of the second antenna element 6 defines a first width W1 of the chiral antenna.

Further, the respective opposing straight end of the first and second antenna define a respective second width and length of the first chiral antenna. That means, the respective opposing straight end portions of the first chiral antenna element define a second width of the first chiral antenna and the respective opposing straight end portions of the second antenna element define a second length of the chiral antenna, that means, therefore, the respective second length and second width is, in particular, longer than the first length and respectively first width.

It may be the case that the respective first length and width correspond to each other and/or that the second length and width correspond to each other; in this case the first width and length define a size of the first chiral antenna, first respectively second size of the chiral antenna.

However, at least the respective further antenna, which has a loop, surrounds the first chiral antenna such that the first length and width is smaller than the inner diameter of the further antenna and the first chiral antenna is placed within a central portion of the further antenna. With said combination a good tradeoff between size, front-to-back ratio and circular polarization can be achieved.

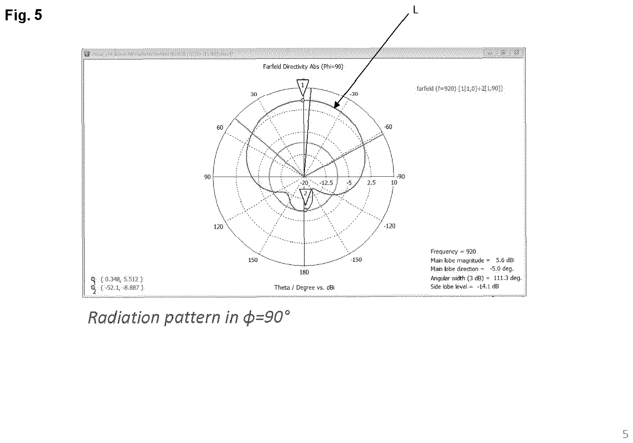

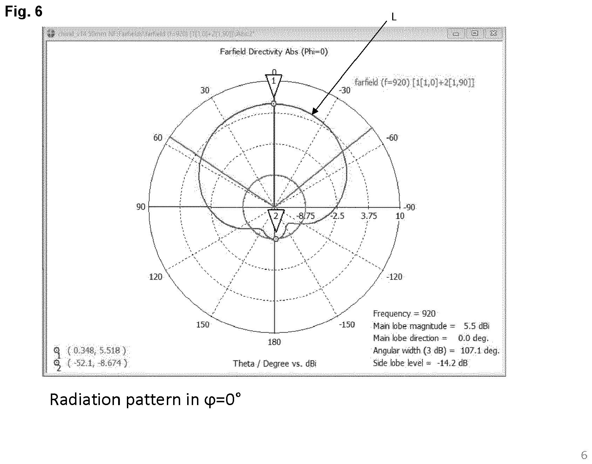

Figs. 5 and 6 show the radiation pattern/ antenna diagram which has been calculated for the embodiment shown in Figs. 1 and 7.

It can be seen therefrom that the front-to-back ratio of the beam is improved (e.g. Lobe identified with L in Figs 5 and 6).

Thus by the combined arrangement a circular polarization of the beam including a good front-to-back ratio and a small sized antenna arrangement can be provided.

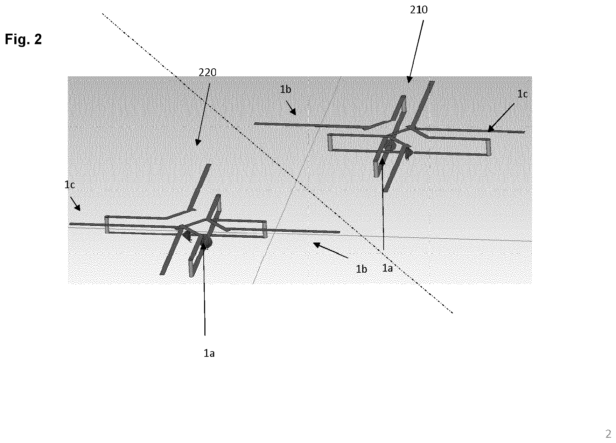

Fig. 2 shows a second embodiment of the present invention. In this second embodiment conversely to the first embodiment, there is provided one first chiral antenna 110 and a second chiral antenna 220. The different chiral antennas have opposite chiralities. That means, only by a mirror operation along the mirror plane shown by the chain line in Fig. 2, the respective first and second chiral antenna can be made identical.

However, the first and second chiral antenna have the same configuration as the aforementioned described chiral antenna 10 for the first embodiment. However, both chiral antennas are provided in the same circuit board.

Corresponding layers of the chiral antennas can be provided in corresponding planes. That means a first wire section of one antenna element can be provided in the same layer as a first wire section corresponding antenna element in the second chiral antenna.

The combination of two chiral antennas may provide a right-handed beam and a left-handed beam. Also this combination of both antennas provides less space than the conventional known antennas.

Further, it is beneficial that the respective circuit board itself or the respective combined antenna have the following dimensions in their area when viewed from top of the printed circuit board and thicknesses.

The combined antenna arrangement defined by the first chiral antenna 10, 210 and the further antenna 7, or the first chiral antenna 210 and the second chiral antenna 220 may occupy an area of the printed circuit board when viewed form a top or bottom side of 90mm x 90mm or less.

For the combination of the first chiral antenna with the second chiral antenna, said antennas occupy an area of a printed circuit board of 90 mm x 90 mm or less, in particular of 88 mm x 80 mm or less.

For the combination of the first chiral antenna with the further antenna, said antennas occupy an area of a printed circuit board of 60 mm x 60 mm or less in particular of 54x54mm or less. The combined antenna arrangement may have a thickness of approximately 3.2 mm or less, and preferably 2.4 mm or less.

The present invention also provides an RFID transmitter unit and/or an RFID receiver unit having one or more of the aforementioned inventive antenna arrangements.

### Reference Sign List

- 101: first antenna element
- 102: second antenna element
- 103, 104: loop portion
- 105, 106, 107, 108: straight portions
- 201: loop antenna
- 202: microchip
- 301: patch antenna
- 1: first antenna element
- 2: second antenna element
- 10: first Chiral antenna
- 1a: loop portion
- 1b, 1c: straight end portions
- 2: first straight wire section
- 3a, 3b: second straight wire sections
- 4a, 4b: via connector
- 5a, 5a: transition wire section
- 7: further antenna
- 8: loop
- 8a, b, c, d: loop sections
- 9: capacitor
- 11: contacting point
- 210: first Chiral antenna
- 220: second chiral antenna
- L1: first length
- W1: first width
- L2: second length
- W2: second width
- L2: length of antenna arrangement
- W2: width of antenna arrangement
- d: distance
- C1: first voltage supply point
- C2: second voltage supply point
- L: Lobe

## Claims

1. An assembly comprising a printed circuit board and an antenna arrangement provided on the printed circuit board, the antenna arrangement having a first chiral antenna (10) constituted by a first antenna element (1) and a second antenna element (6),
wherein each antenna element (1,6) is constituted by a wire having a loop portion (1a) and two straight end portions (1b , 1c) extending in opposing directions orthogonally with respect to the loop portion (1a),
wherein the first and second antenna elements (1, 6) are rotated with respect to each other about 90°and adapted to be fed with a phase difference of 90°, and are provided within one plane offset with respect to each other,
wherein an outer diameter of the loop portion (1a) of the first antenna element (1) defines a first length (L1) of the first chiral antenna (10), and the outer diameter of the loop portion (1a) of the second antenna element (6) defines a first width (W1) of the first chiral antenna (10), and
wherein the opposing straight end portions (1b, 1c) of the first antenna element (1) define a second width (W2) of the first chiral antenna (10), and the opposing straight end portions (1b, 1c) of the second antenna element (6) define a second length (L2) of the first chiral antenna (10),
wherein each loop portion (1a) of the first chiral antenna (10) is constituted by a first straight wire section (2) provided in one layer of the printed circuit board and two second straight wire sections (3a, 3b) provided in a different layer of the printed circuit board, different from the one layer, wherein each of said second straight wire sections (3a, 3b) is connected to a respective one of the straight end portions (1b, 1c), which are respectively defined by a third straight wire section, which is provided in the same layer of the printed circuit board as the second straight wire sections (3a, 3b), wherein the respective ends the second straight wire sections (3a, 3b), which are not connected to the third straight wire section, are connected to respective ends of the first straight wire section (2) via respective via connectors (4a, 4b) in the printed circuit board;
wherein there is provided a further antenna (7), wherein the further antenna (7) is constituted by a loop (8) having an inner diameter which is bigger than at least the first length and width (L1, W1) of the first chiral antenna (10), such that the first chiral antenna (10) is provided with its first length and width (L1, W1) entirely within the loop (8) of the further antenna (7).

2. Assembly of claim 1, wherein the loop (8) of the further antenna (10) is arranged approximately orthogonally with respect to the loop portions (1a) of the first chiral antenna (10).

3. Assembly of claim 1 or 2, wherein the loop (8) of the further antenna (7) is constituted by loop sections (8a, 8b, 8c, 8d) which are connected with respect to each other by a respective capacitor means (9).

4. Assembly of claim 1 or 2, wherein the loop (8) of the further antenna (7) is constituted by a loop wire of the printed circuit board.

5. Assembly of claim 4, wherein the loop wire (8) is or is not provided in the same layer of the printed circuit board as one wire section of the first chiral antenna (10) and/or is or is not provided within the same printed circuit board.

6. Assembly of any of claims 2 to 5, wherein the further antenna (7) has only one single loop (8) which is connectable to a voltage supply.

7. Assembly of any of the foregoing claims, wherein one or both of the straight end portions (1b, 1c) of a respective one of the first antenna element (1) and the second antenna element (6) of the first chiral antenna (10) extend in a radial direction with respect to the loop (8) of the further antenna (7) and crosses or cross the loop (8) of the further antenna (7) when viewed from a top side along a central axis of the loop (8) of the further antenna (7), such that a respective length (L3) and width (W3) of the antenna arrangement is defined at one end side by the very end of the one straight end portion of the straight end portions (1b, 1c) which extends in the radial direction with respect to the loop (8) of the further antenna (7) and at the opposing end side by an outer diameter portion of the loop (8) of the further antenna, or such that a respective length (L3) and width (W3) of the antenna arrangement is defined by the opposing ends of the straight end portions (1b, 1c) of the same antenna element, which straight end portions (1b, 1c) extend in the radial direction with respect to the loop (8) of the further antenna (7).

8. Assembly of claim 1, wherein the respective loop portions (1a) of the first antenna element (1) and the second antenna element (6), the first straight wire section (2) and the second straight wire sections (3a, 3b) of different antenna elements (1, 6) are provided in different layers of the printed circuit board.

9. Assembly of claim 8, wherein the second straight wire sections (3a, 3b) of the second antenna element (6) are provided in a layer of the printed circuit board between the second straight wire sections (3a, 3b) of the first antenna element (1) and the first straight wire section (2) of the first antenna element (1).

10. Assembly of any of claims 1 to 9, wherein each second straight wire section (3a, 3b) is connected to the respective third straight wire section via a respective transition wire section (5a, 5b) connecting the third straight wire section with the second straight wire section (3a, 3b), wherein the transition wire section (5a, 5b) provides an inclined transition within the same layer of the printed circuit board as the second straight wire section (3a, 3b) and the respective third straight wire section, such that the second straight wire section (3a, 3b) is arranged approximately orthogonal to the third straight wire section.

11. Assembly of claim 10, wherein the transition wire sections (5a, 5b) of a respective antenna element (1, 6) are arranged approximately parallel with respect to each other and have a predetermined distance (d) from each other within the direction of the layer of the printed circuit board.

12. Assembly of any of any of the foregoing claims, wherein a second chiral antenna (220) having the same constitution as but an opposite chirality than the first chiral antenna (210) is provided on the same printed circuit board.

13. An assembly comprising a printed circuit board and an antenna arrangement provided on the printed circuit board, the antenna arrangement having
a first chiral antenna (210) constituted by a first antenna element (1) and a second antenna element (6),
wherein each antenna element (1,6) is constituted by a wire having a loop portion (1a) and two straight end portions (1b , 1c) extending in opposing directions orthogonally with respect to the loop portion (1a),
wherein the first and second antenna elements (1, 6) are rotated with respect to each other about 90° and adapted to be fed with a phase difference of 90°, and are provided within one plane offset with respect to each other,
wherein an outer diameter of the loop portion (1a) of the first antenna element (1) defines a first length (L1) of the first chiral antenna (10), and the outer diameter of the loop portion (1a) of the second antenna element (6) defines a first width (W1) of the first chiral antenna (10), and
wherein the opposing straight end portions (1b, 1c) of the first antenna element (1) define a second width (W2) of the first chiral antenna (10), and the opposing straight end portions (1b, 1c) of the second antenna element (6) define a second length (L2) of the first chiral antenna (10),
wherein each loop portion (1a) of the first chiral antenna (10) is constituted by a first straight wire section (2) provided in one layer of the printed circuit board and two second straight wire sections (3a, 3b) provided in a different layer of the printed circuit board, different from the one layer, wherein each of said second straight wire sections (3a, 3b) is connected to a respective one of the straight end portions (1b, 1c), which are respectively defined by a third straight wire section, which is provided in the same layer of the printed circuit board as the second straight wire sections (3a, 3b), wherein the respective ends of the second straight wire sections (3a, 3b), which are not connected to the third straight wire, are connected to respective ends of the first straight wire section (2) via respective via connectors (4a, 4b) in the printed circuit board;
wherein
a second chiral antenna (220) having the same constitution as the first chiral antenna (210) is provided on the same printed circuit board adjacent to the first chiral antenna (210), wherein the chirality of the first and second chiral antennas (220, 210) is opposite.

14. Assembly of any of any of the foregoing claims, wherein the combined antenna defined by the first chiral antenna (10, 210) and the further antenna (7), or the first chiral antenna (210) and the second chiral antenna (220) occupies an area of the printed circuit board when viewed form a top or bottom side of less than 90mmx90mm, in particular less than 60mm x 60mm.

15. Assembly of any of any of claim 14, wherein the combined antenna has a thickness approximately 3.2 mm or less, and preferably 2.4 mm or less.

16. An RFID transmitter and/or an RFID receiver unit having an assembly according to any of the foregoing claims.

## Patentansprüche

1. Anordnung, die eine gedruckte Leiterplatte und eine auf der gedruckten Leiterplatte vorgesehene Antennenanordnung aufweist, wobei die Antennenanordnung umfasst
eine erste chirale Antenne (10), die durch ein erstes Antennenelement (1) und ein zweites Antennenelement (6) gebildet ist,
wobei jedes Antennenelement (1, 6) durch einen Draht mit einem Schleifenteil (1a) und zwei geraden Endteilen (1b, 1c) gebildet ist, die sich in entgegengesetzte Richtungen orthogonal in Bezug auf den Schleifenteil (1a) erstrecken,
wobei das erste und zweite Antennenelement (1, 6) in Bezug aufeinander um 90° gedreht und dafür angepasst sind, mit einer Phasendifferenz von 90° gespeist zu werden, und innerhalb einer Ebene versetzt zueinander vorgesehen sind,
wobei ein Außendurchmesser des Schleifenteils (1a) des ersten Antennenelements (1) eine erste Länge (L1) der ersten chiralen Antenne (10) definiert, und der Außendurchmesser des Schleifenteils (1a) des zweiten Antennenelements (6) eine erste Breite (W1) der ersten chiralen Antenne (10) definiert, und
wobei die entgegengesetzten geraden Endteile (1b, 1c) des ersten Antennenelements (1) eine zweite Breite (W2) der ersten chiralen Antenne (10) definieren, und die entgegengesetzten geraden Endteile (1b, 1c) des zweiten Antennenelements (6) eine zweite Länge (L2) der ersten chiralen Antenne (10) definieren,
wobei jeder Schleifenteil (1a) der ersten chiralen Antenne (10) durch einen ersten geraden Drahtabschnitt (2), der in einer Schicht der gedruckten Leiterplatte vorgesehen ist, und zwei zweite gerade Drahtabschnitte (3a, 3b) gebildet ist, die in einer anderen Schicht der gedruckten Leiterplatte vorgesehen sind, die sich von der einen Schicht unterscheidet, wobei jeder der zweiten geraden Drahtabschnitte (3a, 3b) mit einem jeweiligen der geraden Endteile (1b, 1c) verbunden ist, die jeweils durch einen dritten geraden Drahtabschnitt definiert sind, welcher in derselben Schicht der gedruckten Leiterplatte vorgesehen ist wie die zweiten geraden Drahtabschnitte (3a, 3b), wobei die jeweiligen Enden der zweiten geraden Drahtabschnitte (3a, 3b), die nicht mit dem dritten geraden Drahtabschnitt verbunden sind, über jeweilige Durchgangsverbinder (4a, 4b) in der gedruckten Leiterplatte mit jeweiligen Enden des ersten geraden Drahtabschnitts (2) verbunden sind;
wobei eine weitere Antenne (7) vorgesehen ist, wobei die weitere Antenne (7) durch eine Schleife (8) mit einem Innendurchmesser gebildet ist, der größer als mindestens die erste Länge und Breite (L1, W1) der ersten chiralen Antenne (10) ist, so dass die erste chirale Antenne (10) mit ihrer ersten Länge und Breite (L1, W1) vollständig innerhalb der Schleife (8) der weiteren Antenne (7) vorgesehen ist.

2. Anordnung nach Anspruch 1, wobei
die Schleife (8) der weiteren Antenne (10) ungefähr orthogonal in Bezug auf die Schleifenteile (1a) der ersten chiralen Antenne (10) angeordnet ist.

3. Anordnung nach Anspruch 1 oder 2, wobei
die Schleife (8) der weiteren Antenne (7) durch Schleifenabschnitte (8a, 8b, 8c, 8d) gebildet ist, die in Bezug aufeinander über eine jeweilige Kondensatoreinrichtung (9) verbunden sind.

4. Anordnung nach Anspruch 1 oder 2, wobei
die Schleife (8) der weiteren Antenne (7) durch einen Schleifendraht der gedruckten Leiterplatte gebildet ist.

5. Anordnung nach Anspruch 4, wobei
der Schleifendraht (8) in derselben Schicht der gedruckten Leiterplatte wie ein Drahtabschnitt der ersten chiralen Antenne (10) vorgesehen ist oder auch nicht, und/oder innerhalb derselben gedruckte Leiterplatte vorgesehen ist oder auch nicht.

6. Anordnung nach einem der Ansprüche 2 bis 5, wobei
die weitere Antenne (7) nur eine einzige Schleife (8) hat, die an eine Spannungsversorgung anschließbar ist.

7. Anordnung nach einem der vorhergehenden Ansprüche, wobei
eines oder beide der geraden Endteile (1b, 1c) eines jeweiligen des ersten Antennenelements (1) und zweiten Antennenelements (6) der ersten chiralen Antenne (10) sich in einer radialen Richtung in Bezug auf die Schleife (8) der weiteren Antenne (7) erstreckt bzw. erstrecken und die Schleife (8) der weiteren Antenne (7) kreuzt oder kreuzen, und zwar bei Betrachtung von oben entlang einer Mittelachse der Schleife (8) der weiteren Antenne (7),
so dass eine jeweilige Länge (L3) und Breite (W3) der Antennenanordnung an einer Endseite durch das äußerste Ende des einen geraden Endteils der geraden Endteile (1b, 1c) definiert ist, der sich in der radialen Richtung in Bezug auf die Schleife (8) der weiteren Antenne (7) erstreckt, und an der entgegengesetzten Endseite durch einen Außendurchmesserabschnitt der Schleife (8) der weiteren Antenne definiert ist,
oder so, dass eine jeweilige Länge (L3) und Breite (W3) der Antennenanordnung durch die entgegengesetzten Enden der geraden Endteile (1b, 1c) desselben Antennenelements definiert sind, welche geraden Endteile (1b, 1c) sich in der radialen Richtung in Bezug auf die Schleife (8) der weiteren Antenne (7) erstrecken.

8. Anordnung nach Anspruch 1, wobei
die jeweiligen Schleifenteile (1a) des ersten Antennenelements (1) und zweiten Antennenelements (6), der erste gerade Drahtabschnitt (2) und die zweiten geraden Drahtabschnitte (3a, 3b) von verschiedenen Antennenelementen (1, 6) in verschiedenen Schichten der gedruckten Leiterplatte vorgesehen sind.

9. Anordnung nach Anspruch 8, wobei
die zweiten geraden Drahtabschnitte (3a, 3b) des zweiten Antennenelements (6) in einer Schicht der gedruckten Leiterplatte zwischen den zweiten geraden Drahtabschnitten (3a, 3b) des ersten Antennenelements (1) und dem ersten geraden Drahtabschnitt (2) des ersten Antennenelements (1) vorgesehen sind.

10. Anordnung nach einem der Ansprüche 1 bis 9, wobei
jeder zweite gerade Drahtabschnitt (3a, 3b) mit dem jeweiligen dritten geraden Drahtabschnitt über einen jeweiligen Übergangsdrahtabschnitt (5a, 5b) verbunden ist, der den dritten geraden Drahtabschnitt mit dem zweiten geraden Drahtabschnitt (3a, 3b) verbindet, wobei der Übergangsdrahtabschnitt (5a, 5b) einen schrägen Übergang innerhalb derselben Schicht der gedruckten Leiterplatte wie der zweite gerade Drahtabschnitt (3a, 3b) und der jeweilige dritte gerade Drahtabschnitt vorsieht, so dass der zweite gerade Drahtabschnitt (3a, 3b) ungefähr orthogonal zum dritten geraden Drahtabschnitt angeordnet ist.

11. Anordnung nach Anspruch 10, wobei
die Übergangsdrahtabschnitte (5a, 5b) eines jeweiligen Antennenelements (1, 6) ungefähr parallel in Bezug aufeinander angeordnet sind und einen vorbestimmten Abstand (d) voneinander innerhalb der Richtung der Schicht der gedruckten Leiterplatte haben.

12. Anordnung nach einem der vorhergehenden Ansprüche, wobei
eine zweite chirale Antenne (220) mit demselben Aufbau wie die erste chirale Antenne (210), aber mit entgegengesetzter Chiralität zu dieser, auf derselben gedruckten Leiterplatte vorgesehen ist.

13. Anordnung mit einer gedruckten Leiterplatte und einer auf der gedruckten Leiterplatte vorgesehenen Antennenanordnung, wobei die Antennenanordnung
eine erste chirale Antenne (210) hat, die durch ein erstes Antennenelement (1) und ein zweites Antennenelement (6) gebildet ist,
wobei jedes Antennenelement (1, 6) durch einen Draht mit einem Schleifenteil (1a) und zwei geraden Endteilen (1b, 1c) gebildet ist, die sich in entgegengesetzte Richtungen orthogonal in Bezug auf den Schleifenteil (1a) erstrecken,
wobei das erste und zweite Antennenelement (1, 6) in Bezug aufeinander um 90° gedreht und dafür angepasst sind, mit einer Phasendifferenz von 90° gespeist zu werden, und innerhalb einer Ebene versetzt zueinander vorgesehen sind,
wobei ein Außendurchmesser des Schleifenteils (1a) des ersten Antennenelements (1) eine erste Länge (L1) der ersten chiralen Antenne (10) definiert, und der Außendurchmesser des Schleifenteils (1a) des zweiten Antennenelements (6) eine erste Breite (W1) der ersten chiralen Antenne (10) definiert, und
wobei die entgegengesetzten geraden Endteile (1b, 1c) des ersten Antennenelements (1) eine zweite Breite (W2) der ersten chiralen Antenne (10) definieren, und die entgegengesetzten geraden Endteile (1b, 1c) des zweiten Antennenelements (6) eine zweite Länge (L2) der ersten chiralen Antenne (10) definieren,
wobei jeder Schleifenteil (1a) der ersten chiralen Antenne (10) durch einen ersten geraden Drahtabschnitt (2), der in einer Schicht der gedruckten Leiterplatte vorgesehen ist, und zwei zweite gerade Drahtabschnitte (3a, 3b) gebildet ist, die in einer anderen Schicht der gedruckten Leiterplatte vorgesehen sind, die sich von der einen Schicht unterscheidet, wobei jeder der zweiten geraden Drahtabschnitte (3a, 3b) mit einem jeweiligen der geraden Endteile (1b, 1c) verbunden ist, die jeweils durch einen dritten geraden Drahtabschnitt definiert sind, welcher in derselben Schicht der gedruckten Leiterplatte vorgesehen ist wie die zweiten geraden Drahtabschnitte (3a, 3b), wobei die jeweiligen Enden der zweiten geraden Drahtabschnitte (3a, 3b), die nicht mit dem dritten geraden Draht verbunden sind, über jeweilige Durchgangsverbinder (4a, 4b) in der gedruckten Leiterplatte mit jeweiligen Enden des ersten geraden Drahtabschnitts (2) verbunden sind;
wobei eine zweite chirale Antenne (220) mit demselben Aufbau wie die erste chirale Antenne (210) auf derselben gedruckten Leiterplatte angrenzend an die erste chirale Antenne (210) vorgesehen ist,
wobei die Chiralität der ersten und zweiten chiralen Antenne (220, 210) entgegengesetzt ist.

14. Anordnung nach einem der vorhergehenden Ansprüche, wobei
die kombinierte Antenne, die durch die erste chirale Antenne (10, 210) und die weitere Antenne (7) definiert ist, oder die erste chirale Antenne (210) und die zweite chirale Antenne (220), bei Betrachtung von der Oberseite oder Unterseite aus, eine Fläche der gedruckten Leiterplatte einnehmen, die kleiner als 90mm x 90mm, insbesondere kleiner als 60mm x 60mm ist.

15. Anordnung nach Anspruch 14, wobei
die kombinierte Antenne eine Dicke von ungefähr 3,2 mm oder weniger und vorzugsweise von 2,4 mm oder weniger hat.

16. RFID-Sender- und/oder RFID-Empfängereinheit mit einer Anordnung nach einem der vorangehenden Ansprüche.

## Revendications

1. Ensemble comprenant une carte de circuit imprimé et un agencement d'antenne prévu sur la carte de circuit imprimé, l'agencement d'antenne ayant une première antenne chirale (10) constituée par un premier élément d'antenne (1) et un second élément d'antenne (6) ;
dans lequel chaque élément d'antenne (1, 6) est constitué par un câble ayant une partie de boucle (1a) et deux parties d'extrémité droites (1b, 1c) s'étendant dans des directions opposées perpendiculairement par rapport à la partie de boucle (1a) ;
dans lequel les premier et second éléments d'antenne (1, 6) sont tournés l'un par rapport à l'autre d'environ 90° et conçus pour être alimentés avec une différence de phase de 90°, et sont prévus à l'intérieur d'un plan décalé l'un par rapport à l'autre ;
dans lequel un diamètre extérieur de la partie de boucle (1a) du premier élément d'antenne (1) définit une première longueur (L1) de la première antenne chirale (10) et le diamètre extérieur de la partie de boucle (1a) du second élément d'antenne (6) définit une première largeur (W1) de la première antenne chirale (10) ; et
dans lequel les parties d'extrémité droites (1b, 1c) opposées du premier élément d'antenne (1) définissent une seconde largeur (W2) de la première antenne chirale (10), et les parties d'extrémité droites (1b, 1c) opposées du second élément d'antenne (6) définissent une seconde longueur (L2) de la première antenne chirale (10) ;
dans lequel chaque partie de boucle (1a) de la première antenne chirale (10) est constituée par une première section de câble droite (2) prévue dans une couche de la carte de circuit imprimé et de deux secondes sections de câble droites (3a, 3b) prévues dans une couche différente de la carte de circuit imprimé, différente de la couche dans laquelle chacune desdites secondes sections de câble droites (3a, 3b) est reliée à une partie respective parmi les parties d'extrémité droites (1b, 1c) qui sont respectivement définies par une troisième section de câble droite prévue dans la même couche de la carte de circuit imprimé que les secondes sections de câble droites (3a, 3b), dans lequel les extrémités respectives des secondes sections de câble droites (3a, 3b) qui ne sont pas reliées à la troisième section de câble droite sont reliées aux extrémités respectives de la première section de câble droite, via les connecteurs respectifs (4a, 4b) dans la carte de circuit imprimé ;
dans lequel il est prévu une antenne supplémentaire (7), dans lequel l'antenne supplémentaire (7) est constituée par une boucle (8) ayant un diamètre intérieur supérieur à au moins la première longueur et largeur (L1, W1) de la première antenne chirale (10), de telle sorte que la première antenne chirale (10) a de sa première longueur et largeur (L1, W1) entièrement à l'intérieur de la boucle (8) de l'antenne supplémentaire (7).

2. Ensemble selon la revendication 1, dans lequel la boucle (8) de l'antenne supplémentaire (10) est agencée approximativement perpendiculairement par rapport aux parties de boucle (1a) de la première antenne chirale (10).

3. Ensemble selon la revendication 1 ou 2, dans lequel la boucle (8) de l'antenne supplémentaire (7) est constituée par des sections de boucle (8a, 8b, 8c, 8d) qui sont reliées l'une par rapport à l'autre par des moyens de condensateur (9) respectifs.

4. Ensemble selon la revendication 1 ou 2, dans lequel la boucle (8) de l'antenne supplémentaire (7) est constituée par un câble de boucle de la carte de circuit imprimé.

5. Ensemble selon la revendication 4, dans lequel le câble de boucle (8) est ou n'est pas prévu dans la même couche de la carte de circuit imprimé qu'une section de câble de la première antenne chirale (10) et/ou est ou n'est pas prévu à l'intérieur de la même carte de circuit imprimé.

6. Ensemble selon l'une quelconque des revendications 2 à 5, dans lequel l'antenne supplémentaire (7) a seulement une boucle unique (8) qui peut être reliée à une alimentation en tension.

7. Ensemble selon l'une quelconque des revendications précédentes, dans lequel la ou les deux parties d'extrémité droites (1 b, 1 c) d'un élément respectif parmi le premier élément d'antenne (1) et le second élément d'antenne (6) de la première antenne chirale (10) s'étend ou s'étendent dans une direction radiale par rapport à la boucle (8) de l'antenne supplémentaire (7) et traverse ou traversent la boucle (8) de l'antenne supplémentaire (7) vus depuis un côté supérieur le long d'un axe central de la boucle (8) de l'antenne supplémentaire (7) ;
de telle sorte qu'une longueur (L3) et largeur (W3) respective de l'agencement d'antenne est définie au niveau d'un côté d'extrémité par l'extrême extrémité d'une partie d'extrémité droite des parties d'extrémité droites (1b, 1c) qui s'étend dans la direction radiale par rapport à la boucle (8) de l'antenne supplémentaire (7) et au niveau du côté d'extrémité opposé par une partie de diamètre extérieur de la boucle (8) de l'antenne supplémentaire ; ou de telle sorte qu'une longueur (L3) et largeur (W3) respective de l'agencement d'antenne est définie par les extrémités opposées des parties d'extrémité droites (1b, 1c) du même élément d'antenne dont les parties d'extrémité droites (1b, 1c) s'étendent dans la direction radiale par rapport à la boucle (8) de l'antenne supplémentaire (7).

8. Ensemble selon la revendication 1, dans lequel les parties de boucle (1a) respectives du premier élément d'antenne (1) et du second élément d'antenne (6), la première section de câble droite (2) et les secondes sections de câble droites (3a, 3b) des différents éléments d'antenne (1, 6) sont prévus dans différentes couches de la carte de circuit imprimé.

9. Ensemble selon la revendication 8, dans lequel les secondes sections de câble droites (3a, 3b) du second élément d'antenne (6) sont prévues dans une couche de la carte de circuit imprimé entre les secondes sections de câble droites (3a, 3b) du premier élément d'antenne (1) et la première section de câble droite (2) du premier élément d'antenne (1).

10. Ensemble selon l'une quelconque des revendications 1 à 9, dans lequel chaque seconde section de câble de transition droite (3a, 3b) respective est reliée à la troisième section de câble droite respective via une section de câble (5a, 5b) reliant la troisième section de câble droite avec la seconde section de câble droite (3a, 3b), dans lequel la section de câble de transition (5a, 5b) permet une transition inclinée à l'intérieur de la même couche de la carte de circuit imprimé comme seconde section de câble droite (3a, 3b) et la troisième section de câble droite respective, de telle sorte que la seconde section de câble droite (3a, 3b) est agencée approximativement perpendiculairement à la troisième section de câble droite.

11. Ensemble selon la revendication 10, dans lequel les sections de câble de transition (5a, 5b) d'un élément d'antenne (1, 6) respectif sont agencées approximativement parallèlement l'une par rapport à l'autre et ont une distance prédéterminée (d) l'une par rapport à l'autre à l'intérieur de la direction de la couche de la carte de circuit imprimé.

12. Ensemble selon l'une quelconque des revendications précédentes, dans lequel une seconde antenne chirale (220) ayant la même composition mais une chiralité opposée que la première antenne chirale (210) est prévue sur la même carte de circuit imprimé.

13. Ensemble comprenant une carte de circuit imprimé et un agencement d'antenne prévu sur la carte de circuit imprimé, l'agencement d'antenne ayant :
une première antenne chirale (210) constituée par un premier élément d'antenne (1) et un second élément d'antenne (6) ;
dans lequel chaque élément d'antenne (1, 6) est constitué par un câble ayant une partie de boucle (1a) et deux parties d'extrémité droites (1b, 1c) s'étendant dans des directions opposées perpendiculairement par rapport à la partie de boucle (1a) ;
dans lequel les premier et second éléments d'antenne (1, 6) sont tournés l'un par rapport à l'autre d'environ 90° et conçus pour être alimentés avec une différence de phase de 90° et sont prévus à l'intérieur d'un plan décalé l'un par rapport à l'autre ;
dans lequel un diamètre extérieur de la partie de boucle (1a) du premier élément d'antenne (1) définit une première longueur (L1) de la première antenne chirale (10) et le diamètre extérieur de la partie de boucle (1a) du second élément d'antenne (6) définit une première largeur (W1) de la première antenne chirale (10) ; et
dans lequel les parties d'extrémité droites (1b, 1c) opposées du premier élément d'antenne (1) définissent une seconde largeur (W2) de la première antenne chirale (10) et les parties d'extrémité droites (1b, 1c) opposées du second élément d'antenne (6) définissent une seconde longueur (L2) de la première antenne chirale (10) ;
dans lequel chaque partie de boucle (1a) de la première antenne chirale (10) est constituée par une première section de câble droite (2) prévue dans une couche de la carte de circuit imprimé et deux secondes sections de câble droites (3a, 3b) prévues dans une couche différente de la carte de circuit imprimé, différente de la couche dans laquelle chacune desdites secondes sections de câble droites (3a, 3b) est reliée à une partie respective parmi les parties d'extrémité droites (1b, 1c) qui sont respectivement définies par une troisième section de câble droite prévue dans la même couche de la carte de circuit imprimé que les secondes sections de câble droites (3a, 3b), dans lequel les extrémités respectives des secondes sections de câble droites (3a, 3b) qui ne sont pas reliées au troisième câble droit sont reliées aux extrémités respectives de la première section de câble droite (2) via les connecteurs respectifs (4a, 4b) dans la carte de circuit imprimé ;
dans lequel une seconde antenne chirale (220) ayant la même composition que la première antenne chirale (210) est prévue sur la même carte de circuit imprimé à côté de la première antenne chirale (210) ;
dans lequel la chiralité des première et seconde antennes chirales (220, 210) est opposée.

14. Ensemble selon l'une quelconque des revendications précédentes, dans lequel l'antenne combinée définie par la première antenne chirale (10, 210) et l'antenne supplémentaire (7) ou la première antenne chirale (210) et la seconde antenne chirale (220) occupent une zone de la carte de circuit imprimé lorsque depuis le dessus ou en côté, inférieure à 90 mm x 90 mm, notamment inférieure à 60 mm x 60 mm.

15. Ensemble selon la revendication 14, dans lequel l'antenne combinée a une épaisseur d'approximativement 3,2 mm ou moins et de préférence de 2,4 mm ou moins.

16. Unité d'émetteur RFID et/ou de récepteur RFID ayant un ensemble selon l'une quelconque des revendications précédentes.
